# EUROPEAN PATENT SPECIFICATION

(11) **EP 2 365 228 B1**
(45) Date of publication and mention of the grant of the patent: **17.09.2014**
(21) Application number: 11157483.6
(22) Date of filing: 09.03.2011
(51) Int. Cl.: F16D 1/08, F16D 9/06, F16D 43/21

(54) **Shaft connector and torque limiter**
Wellenverbinder und Drehmomentbegrenzer
Connecteur d'arbre et limiteur de couple

(30) Priority: 10.03.2010 JP 2010053332
(43) Date of publication of application: 14.09.2011
(73) Proprietor: JTEKT CORPORATION, Osaka-shi Osaka 542-8502 (JP)
(72) Inventor: Nakagawa, Nobuo, Osaka-shi, Osaka 542-8502 (JP); Nagayama, Akihide, Osaka-shi, Osaka 542-8502 (JP)
(74) Representative: TBK

(56) References cited:
- WO-A1-00/66900
- DE-A1- 2 659 547
- JP-A- S62 159 815
- US-A1- 2005 072 636

## Description

### 1. Field of the Invention

The present invention relates to a shaft connector and a torque limiter.

### 2. Related Art

Usually, as a torque limiter, a torque limiter is known that is disclosed in JP-A-62-159815. A shaft connector according to the preamble of claim 1 is known from DE 2659547 A1. Further relevant background of the invention is disclosed in WO 00/66900 A1.

This torque limiter includes a shaft member, a tube member externally fitted to the shaft member. The tube member includes an annular hydraulic passage.

The above-described hydraulic passage is extended in the axial direction of the shaft member. The tube member includes a first tubular member and a second tubular member. An inner peripheral surface of the first tubular member is diametrically opposed to an outer peripheral surface of the second tubular member through the hydraulic passage.

The first member is welded and connected to the second member at a first position axially adjacent to one end of the hydraulic passage and a second position axially adjacent to the other end of the hydraulic passage. The hydraulic passage is overlapped on the first position in the axial direction and the second position in the axial direction.

In the torque limiter, oil is sealed in the annular hydraulic passage to diametrically expand the hydraulic passage to reduce the diameter of an inner peripheral surface of the second member of the tube member and press the inner peripheral surface to an outer peripheral surface of the shaft member so that the tube member is frictionally connected to the shaft member and a torque is transmitted between the tube member and the shaft member.

In the above-described torque limiter, when the torque of a prescribed level or higher is applied to a part between the tube member and the shaft member to generate a relative rotation of the shaft member to the tube member, a sealed end part of an oil drain passage communicating with the hydraulic passage which is opposite to the hydraulic passage side is broken due to the relative rotation and opened to an external part. In such a way, oil in the hydraulic passage is discharged to release the frictional connection of the tube member and the shaft member and interrupt the transmission of the torque between the tube member and the shaft member.

In the above-described usual torque limiter, since the hydraulic passage is diametrically expanded during the transmission of the torque to press the tube member to the shaft member, the welding parts at both sides of the hydraulic passage constantly receive tensile stress in the diametrical direction as a direction for splitting legs. Accordingly, fatigue arises in the periphery of the welding parts, so that it is difficult to avoid the welding parts from being broken.

### SUMMARY OF THE INVENTION

Thus, it is an object of the present invention to provide a shaft connector and a torque limiter that hardly break a welding part for forming a hydraulic passage, are long in their life and high in their reliability.

In order to solve the above-described problems, a shaft connector of the present invention according to claim 1 is provided, which shaft connector includes: a shaft member; and a tube member externally fitted to the shaft member, wherein one member of the tube member and the shaft member has a hydraulic passage for pressing a peripheral surface of the one member to a peripheral surface of the other member when the one member transmits a torque between the one member and the other member of the tube member and the shaft member, the hydraulic passage is extended substantially in the axial direction of the one member, the one member includes a first annular member having the peripheral surface of the one member and a second annular member opposed to the first member through the hydraulic passage, the first member has an annular diametrical protrusion that protrudes toward a side of the one member diametrically opposite to the other member in one side of the hydraulic passage in the axial direction, the second member includes a peripheral surface located in an opposite side to the peripheral surface side of the one member in the diametrical direction relative to the hydraulic passage and an annular diametrical protrusion that is located in one side of the peripheral surface in the axial direction and protrudes toward the other member side in the diametrical direction in one side of the hydraulic passage in the axial direction, a peripheral surface located in an end of an extending part of the first member in the diametrical direction is formed integrally with a peripheral surface located in an end of an extending part of the second member in the diametrical direction and a welding part is provided that is located in an opposite side to the peripheral surface side of the one member in the diametrical direction relative to the hydraulic passage.

According to the present invention, the first member and the second member forming the hydraulic passage respectively have the ends of the annular diametrical protrusions in an opposite side to the peripheral surface of the one member in the diametrical direction relative to the hydraulic passage and the peripheral surface located in the end of the diametrically extending part of the first member is welded to the peripheral surface located in the end of the diametrically extending part of the second member. Accordingly, as compared with the usual structure, the stress applied to the welding part can be exceptionally reduced. Thus, the welding part for forming the hydraulic passage can be greatly restrained from being broken without receiving an influence of a shortage of weld penetration or an excessive weld penetration.

A torque limiter of the present invention includes a shaft connector according to the invention and is characterized in that the hydraulic passage is diametrically expanded by liquid sealed in the hydraulic passage to frictionally engage the shaft member with the tube member and the liquid sealed in the hydraulic passage is removed to rotate the shaft member relative to the tube member.

According to the present invention, as compared with the usual torque limiter, the welding part for forming the hydraulic passage can be restrained from being broken, a life can be lengthened and reliability can be enhanced.

According to the shaft connector of the present invention, as compared with a usual structure, the stress applied to the welding part can be exceptionally reduced and the welding part for forming the hydraulic passage can be greatly restrained from being broken without receiving an influence of a shortage of weld penetration or an excessive weld penetration.

### BRIEF DESCRIPTION OF THE DRAWINGS

Fig. 1 is an axially sectional view of a torque limiter of one exemplary embodiment of the present invention.
Fig. 2 is a schematic diagram for explaining a structure of a welding part of the torque limiter of the exemplary embodiment.
Fig. 3 is a diagram showing a result of an FEM analysis showing a stress distribution applied to the torque limiter.
Fig. 4 is a diagram showing a result of an FEM analysis showing a stress distribution applied to the torque limiter.
Fig. 5 is a diagram of a torque limiter of a modified example of the present invention which corresponds to Fig. 2.

### DETAILED DESCRIPTION OF THE PREFERRED EMBODIMENTS

Now, the present invention will be described in more detail in accordance with an illustrated form.

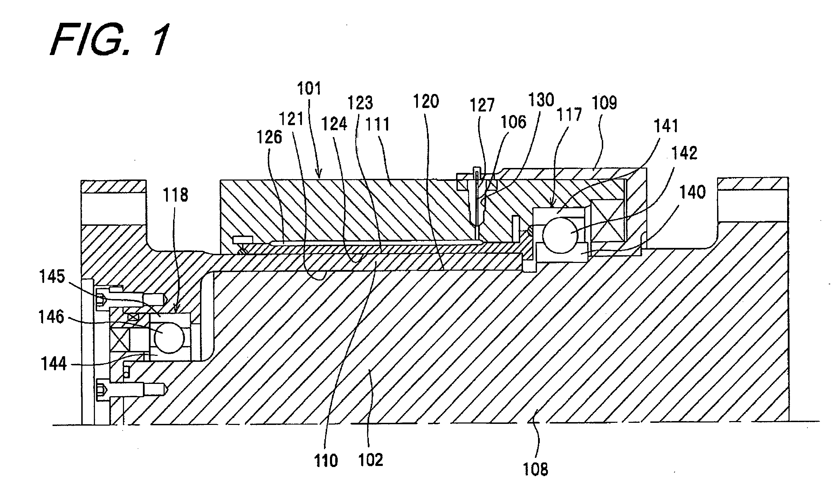

Fig. 1 is an axially sectional view of a torque limiter of one exemplary embodiment of the present invention.

The torque limiter includes a tube member 101 as one member, a shaft member 102 as the other member, a shear valve 106, a ball bearing 117 and a ball bearing 118.

The tube member 101 includes a first tube member 110 and a second tube member 111. The first tube member 110 includes a substantially cylindrical inner peripheral surface 121 as a peripheral surface of the one member. The inner peripheral surface 121 is frictionally connected to an outer peripheral surface 120 of the shaft member 102 as a peripheral surface of the other member during a transmission of a power. The outer peripheral surface 120 of the shaft member 102 and the inner peripheral surface 121 of the tube member 101 as torque transmitting surfaces to which a low temperature nitrifying process is applied at a processing temperature of 400° or higher and 420° or lower are solidified. A surface layer part including the outer peripheral surface 120 of the shaft member 102 is made of a nitride layer. A surface layer part including the inner peripheral surface 121 of the tube member 101 is made of a nitride layer. The thickness of the two nitride layers is set to 2 µm or larger and 3 µm or smaller. The hardness of the two nitride layers is substantially the same. Both the Vickers hardness Hv of the two nitride layers are 600 Hv or higher. The torque transmitting surfaces may not be nitrified. Further, as the hardness of the torque transmitting surfaces, hardness except the above-described hardness may be used.

The shaft member 102 includes a main body part 108 having the outer peripheral surface 120 and an engaging part 109 having a substantially L shaped section that protrudes from the outer surface of the main body part 108. A part between the outer peripheral surface 120 of the shaft member 102 and the inner peripheral surface 121 of the tube member 101 is filled with turbine oil or traction fluid as lubricating oil for preventing a seizure.

The second tube member 111 includes a substantially cylindrical inner peripheral surface 124 that abuts on a substantially cylindrical outer peripherals surface 123 of the first tube member 110. The second tube member 111 includes a shear valve attaching hole 130 and an annular hydraulic passage 126 as one example of a fluid pressure passage. The hydraulic passage 126 is formed in the second tube member 111. The hydraulic passage 126 is extended by a prescribed length in the axial direction so as to extend along the inner peripheral surface 124 of the second tube member 111.

Te above-described shear valve 106 is fitted to the shear valve attaching hole 130. Under a state that the shear valve 106 is fitted to the shear valve attaching hole 130, one end part of the shear valve 106 protrudes diametrically outward from an outer peripheral surface of the second tube member 111. Further, the above-described engaging part 109 having the substantially L shaped section has a diametrically extending part and an axially extending part. The diametrically extending part extends substantially in the diametrical direction from the main body part 108 of the shaft member 102 and is opposed to an end face of the second tube member 111 in the axial direction. Further, the axially extending part is connected to the diametrically extending part and extended in the axial direction along the outer peripheral surface of the second tube member 111. The one end part of the shear valve 106 is engaged with the axially extending part of the engaging part 109.

The shear valve 106 has a tube 127 with only one end opened. Under the state that the shear valve 106 is fitted to the shear valve attaching hole 130, the tube 127 extends substantially in the diametrical direction of the shaft member 102. Further, under the state that the shear valve 106 is fitted to the shear valve attaching hole 130, one end part of a closed side of the tube 127 protrudes diametrically outward from the outer peripheral surface of the second tube member 111. An opening of the tube 127 opposite to the closed side communicates with one end of the hydraulic passage 126. A shear valve 106 side of the hydraulic passage 126 forms a sealed space.

The ball bearing 117 includes an inner ring 140 externally fitted and fixed to an outer surface of the shaft member 102, an outer ring 141 internally fitted and fixed to an inner surface of the second tube member 111 and a ball 142 arranged between a raceway surface of the inner ring 140 and a raceway surface of the outer ring 141. Further, the ball bearing 118 includes an inner ring 144 externally fitted and fixed to the outer surface of the shaft member 102, an outer ring 145 internally fitted and fixed to an inner surface of the first tube member 110 and a ball 146 arranged between a raceway surface of the inner ring 144 and a raceway surface of the outer ring 145. The ball bearings 117 and 118 support the shaft member 102 so as to freely rotate relative to the tube member 101 when the shaft member 102 rotates relative to the tube member 101.

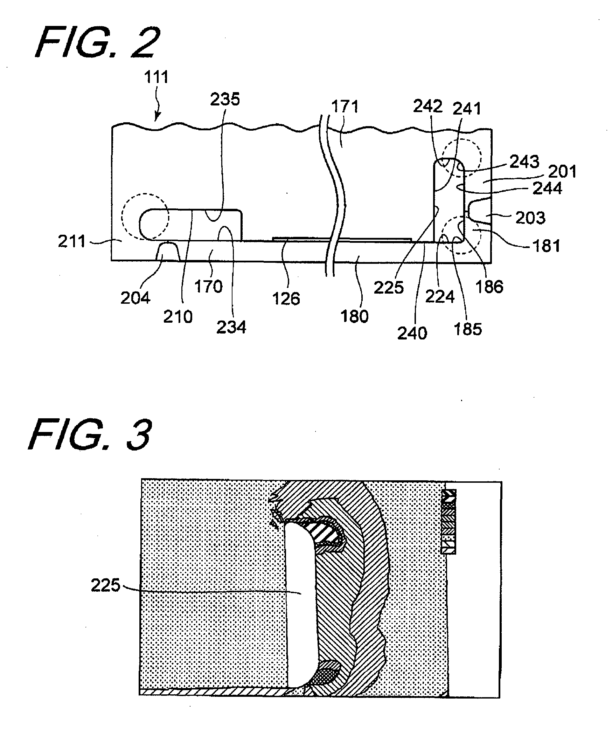

Fig. 2 is a schematic view for explaining welding parts at both sides of the hydraulic passage 126 of the one exemplary embodiment so as to be more easily understood.

As shown in Fig. 2, the second tube member 111 includes a first annular member 170 and a second annular member 171. The first member 170 and the second member 171 are opposed to each other in the diametrical direction through the hydraulic passage 126. In other words, an inner surface of the hydraulic passage 126 include an outer peripheral surface of the first member 170 and an inner peripheral surface of the second member 171 which are opposed to each other in the diametrical direction.

The first member 170 includes a tubular part 180 and an annular diametrical protrusion 181. The diametrical protrusion 181 protrudes outward from the tubular part 180 in the diametrical direction opposite to the inner peripheral surface 121 (see Fig. 1) side in the diametrical direction relative to the hydraulic passage 126, in the ball bearing 117 (see Fig. 1) side in the axial direction of the hydraulic passage 126 as one side in the axial direction. An end face of the diametrical protrusion 181 in the ball bearing 118 (see Fig. 1) side (the other side in the axial direction) in the axial direction includes a diameter enlarged part 185 and a diametrically extending part 186. In the diameter enlarged part 185, a diameter is gradually more enlarged toward the one side in the axial direction. The diametrically extending part 186 is extended diametrically outward from an end part in a diametrically outer side of the diameter enlarged part 185 (to an opposite side to the inner peripheral surface 121 side of a frictional engagement in the diametrical direction relative to the diameter enlarged part 185).

The second member 171 includes an inner peripheral surface 242 and a first diametrical protrusion 201 in the ball bearing 117 side (the one side in the axial direction) in the axial direction of the hydraulic passage 126. The inner peripheral surface 242 is located diametrically outward from the hydraulic passage 126 opposite to the inner peripheral surface 121 (see Fig. 1) side in the diametrical direction relative to the hydraulic passage 126. Further, the first diametrical protrusion 201 is located in the ball bearing 117 side in the axial direction of the inner peripheral surface 242 and protrudes inward in the diametrical direction.

Specifically, the second member 171 includes an inner peripheral surface forming a part of an inner surface of the hydraulic passage 126, an inner peripheral surface 240, a stepped part 241, the inner peripheral surface 242, a diameter reduced part 243 and a diametrically extending part 244. The inner peripheral surface 240 is axially adjacent to one end part in the axial direction of the hydraulic passage 126. Further, the stepped part 241 is extended in the diametrical direction from one end part in the axial direction of the inner peripheral surface 240. Further, the inner peripheral surface 242 is extended from an end part in a diametrically outer side of the stepped part 241 to one side in the axial direction. Further, in the diameter reduced part 243, a diameter is gradually more reduced toward one side in the axial direction from one end side in the axial direction of the inner peripheral surface 242. Further, the diametrically extending part 244 is extended diametrically inward (the inner peripheral surface 121 side of the frictional engagement in the diametrical direction relative to the diameter reduced part 243) from the diameter reduced part 243.

An outer peripheral surface of the diametrical protrusion 181 of the first member 170 is formed integrally with an inner peripheral surface of the diametrical protrusion 201 of the second member 171 by welding. In other words, an end of the diametrical protrusion 181 of the first member 170 is formed integrally with an end of the diametrical protrusion 201 of the second member 171 by an annular welding part 203. The inner peripheral surface 242 of the second member 171 is located with a space from an outer peripheral surface 224 of the first member 170 which is diametrically overlapped on the inner peripheral surface 242. Namely, the second tube member 111 forms a first annular sealing chamber 225. The above-described welding part 203 is located at a position overlapped in the axial direction in a central part between an outer corner part in the diametrical direction of the sealing chamber 225 and an inner corner part in the diametrical direction of the sealing chamber 225.

Further, as shown in Fig. 2, the second member 171 includes, in the ball bearing 118 (see Fig. 1) side (the other side in the axial direction)in the axial direction of the hydraulic passage 126, an inner peripheral surface 210 located diametrically outward from the hydraulic passage 126 and a second diametrical protrusion 211. The second diametrical protrusion 211 protrudes diametrically inward from the ball bearing 118 side in the axial direction of the inner peripheral surface 210. An inner end part of the second diametrical protrusion 211 in the diametrical direction has an end face for welding in the ball bearing 117 side in the axial direction. An inner part of the end face in the diametrical direction is formed integrally with an inner part of an end face in the diametrical direction of the first member 170 in the ball bearing 118 side in the axial direction by welding. The inner peripheral surface 210 of the second member 171 is located with a space from an outer peripheral surface 234 of the first member 170 that is diametrically overlapped on the inner peripheral surface 210. In other words, the second tube member 111 has a second annular sealing chamber 235. An annular welding part 204 in the ball bearing 118 (see Fig. 1) side of the hydraulic passage 126 is located at a position overlapped in the diametrical direction on a central part (a part except both end parts in the axial direction of the sealing chamber 235) in the axial direction of the sealing chamber 235. The sealing chamber 225 and the sealing chamber 235 serve to absorb a distortion generated in the tube member 101.

Fig. 3 is a diagram showing an analyzed result when a stress distribution in the periphery of the sealing chamber 225 is analyzed by an FEM (Finite Element Method) in the torque limiter having the structure shown in Fig. 2. In Fig. 3, in a plurality of hatchings respectively shown in rectangular frames of a right upper part on a sheet, the hatchings of upper parts on the sheet show stress higher than that shown by the hatchings of lower parts.

As shown in Fig. 3, parts having a high stress are located in corner parts (bent parts) of an outer side and an inner side in the diametrical direction of the sealing chamber 225. On the other hand, parts having a low stress are located in a central part between the corner part of the outer side in the diametrical direction of the sealing chamber 225 and the corner part of the inner side in the diametrical direction of the sealing chamber 225. Accordingly, as in the one exemplary embodiment, when the welding part 203 (see Fig. 2) is located at the position overlapped in the axial direction in the central part between the outer corner part in the diametrical direction of the sealing chamber 225 and the inner corner part in the diametrical direction of the sealing chamber 225, the welding part 203 can be greatly restrained from being broken and the life of the torque limiter can be extremely lengthened.

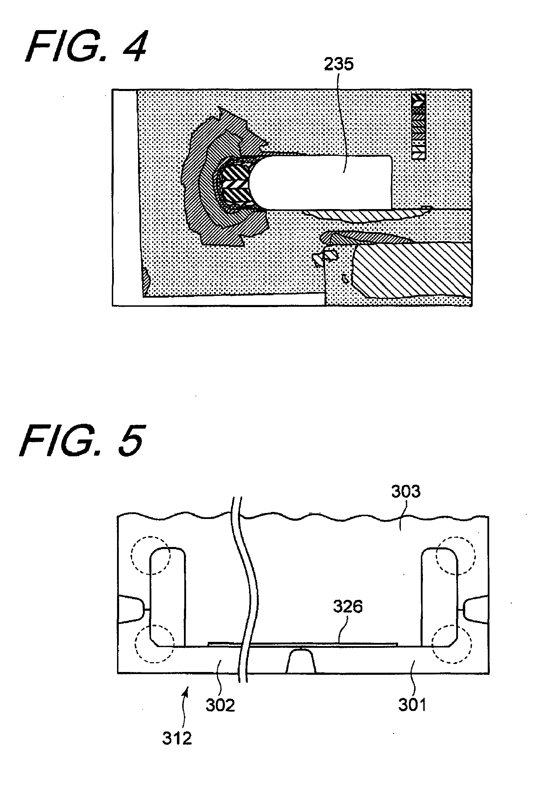

Fig. 4 is a diagram showing an analyzed result when a stress distribution in the periphery of the sealing chamber 235 is analyzed by an FEM in the torque limiter having the structure shown in Fig. 2. In Fig. 4, in a plurality of hatchings respectively shown in rectangular frames of a right upper part on a sheet, the hatchings of upper parts on the sheet show stress higher than that shown by the hatchings of lower parts.

As shown in Fig. 4, parts having a high stress are located in an end part opposite to the hydraulic passage 126 side in the axial direction of the sealing chamber 235. On the other hand, parts having a low stress are located in a central part in the axial direction of the sealing chamber 235 and an end part of the hydraulic passage 126 side in the axial direction of the sealing chamber 235. Accordingly, as in the one exemplary embodiment, when the welding part 204 (see Fig. 2) is located at the position overlapped in the diametrical direction on the central part in the axial direction of the sealing chamber 235, the welding part 204 can be greatly restrained from being broken and the life of the torque limiter can be extremely lengthened.

In torque limiter having the above-described structure, when a load of a prescribed value or lower (a load located within a range when a torque is transmitted) is applied to the tube member 101 or the shaft member 102, the diameter of the inner peripheral surface 121 of the first tube member 110 is reduced by oil for expanding oil pressure that is injected to and sealed in the hydraulic passage 126 through a coupler not shown in the drawing to press the inner peripheral surface 121 to the outer peripheral surface 120 of the shaft member 102. Thus, the shaft member 102 is frictionally connected to the tube member 101 to transmit a torque between the shaft member 102 and the tube member 101.

On the other hand, when a load of a prescribed value or higher (a load larger than the load located within a range when the torque is transmitted) is applied to the shaft member 102 or the tube member 101 so that the outer peripheral surface 120 of the shaft member 102 slips relative to the inner peripheral surface 121 of the first tube part 110 to change positions of the shaft member 102 and the tube member 101 on axes, the engaging part 109 cuts off one end part in a diametrically outward side of the shear valve 106 to discharge outside the oil for expanding oil pressure in the hydraulic passage 126 through the shear valve 106 having the one end part cut off. In such a way, a pressing force of the inner peripheral surface 121 of the first tube member 110 relative to the outer peripheral surface 120 of the shaft member 102 is eliminated to release the frictional connection of the shaft member 102 and the tube member 101 and interrupt the transmission of the torque. In such a way, when an overload arises in the shaft member 102 or the tube member 101, the transmission of the torque is interrupted to protect an expensive machine connected to the torque limiter device.

According to the torque limiter of the exemplary embodiment, the first member 170 forming the hydraulic passage 126 includes the diametrical protrusion 181 that protrudes outward in the diametrical direction in the one side in the axial direction of the hydraulic passage 126. The second member 171 includes the first diametrical protrusion 201 that protrudes inward in the diametrical direction in the one side in the axial direction of the hydraulic passage 126. Since the end of the diametrical protrusion 181 and the end of the first diametrical protrusion 201 are butted against each other and welded together, the stress applied to the welding part 203 can be more extremely reduced than that of the usual structure. Accordingly, an influence of a shortage of weld penetration or an excessive weld penetration is not received and the welding part 203 for forming the hydraulic passage 126 can be greatly restrained from being broken. Therefore, the life of the torque limiter can be lengthened and reliability can be enhanced.

In the torque limiter of the exemplary embodiment, the hydraulic passage 126 is formed in the tube member 101. However, in the present invention, the hydraulic passage may be formed in the shaft member. In this case, for instance, a shear valve is extended in the axial direction. An end part of the shear valve protrudes in the axial direction from an end face of the shaft member in the axial direction and an engaging part of a tube member that is engaged with the end part of the shear valve is extended in the diametrical direction along the end face of the shaft member in the axial direction. In such a way, when the shaft member is rotated relative to the tube member, the end part of the shear valve can be broken to prevent an expensive machine from being broken.

Further, in the torque limier of the above-described exemplary embodiment, the first tube member 110 having the inner peripheral surface 121 that makes a frictional engagement is formed separately from the second tube member 111 having the hydraulic passage 126 in the tube member 101. However, in the present invention, an integrally formed member of the tube member or the shaft member may have a peripheral surface that makes a frictional engagement and a hydraulic passage.

Further, in the torque limiter of the above-described exemplary embodiment, a fluid pressure passage is the hydraulic passage 126 and liquid used for expanding the fluid pressure passage in the diametrical direction is oil. However, in the present invention, as the liquid for expanding the hydraulic passage in the diametrical direction, any liquid such as water except oil may be used.

Further, in the torque limiter of the above-described exemplary embodiment, the two diametrical protrusions 181 and 201 that protrude in the diametrical direction are butted against each other and the butted parts are welded. However, in the present invention, like a below-described modified example shown in Fig. 5, two diametrical protrusions may be butted against each other in both sides in the axial direction of a hydraulic passage and the butted parts may be welded.

Fig. 5 is a diagram corresponding to Fig. 2 in a torque limiter of a modified example of the present invention.

As shown in Fig. 5, in this modified example, a second tube member 312 having a hydraulic passage 326 includes a first annular primary member 301, a second annular primary member 302 and a second annular member 303. As shown in Fig. 5, the first primary member 301 and the second primary member 302 respectively have substantially L shaped forms in section in the axial direction. An outer peripheral surface of the annular hydraulic passage 326 is formed by the first primary member 301 and the second primary member 302. On the other hand, an inner peripheral surface of the hydraulic passage 326 is formed only by the second member 303. An end face of a protrusion in the axial direction of the first primary member 301 having the L shaped section that protrudes in the axial direction is butted against an end face of a protrusion in the axial direction of the second primary member 302 having the L shaped section that protrudes in the axial direction and the butted end faces are welded. In such a way, an integrally formed member having a U shaped form in section with a recessed part is manufactured. A part of an outer peripheral surface of the recessed part is used as an outer peripheral surface of the hydraulic passage 326. Further, in one side in the axial direction of the hydraulic passage 326, the first primary member 301 is welded to the second member 303 in the same method as the welding method in the one side in the axial direction of the hydraulic passage 126 in the torque limiter of the above-described exemplary embodiment. Further, in the other side in the axial direction of the hydraulic passage 326, the second primary member 302 is welded to the second member 303 in the same method as the welding method in the one side in the axial direction of the hydraulic passage 126 in the torque limiter of the above-described exemplary embodiment. Even when such a welding method of three parts is used as described above, as apparent from the FEM analysis of the stress shown in Fig. 3 and Fig. 4, since welding operations are respectively carried out at positions where a stress is not concentrated, the damage of welding parts can be greatly suppressed to form the torque limiter in which a life is lengthened and reliability is high.

In the exemplary embodiment, an expansion of the hydraulic passage in the diametrical direction is applied to the torque limiter. However, in the present invention, the expansion of the hydraulic passage in the diametrical direction may be used in a shaft connector as well as the torque limiter. Specifically, for instance, an expansion of a hydraulic passage may be used to frictionally engage two flange parts with each other.
A first member 170 of a second tube member 111 of a tube member includes an annular diametrical protrusion 181 that protrudes outward in the diametrical direction in one side of a hydraulic passage 126 in the axial direction. A second member 171 of the second tube member 111 includes an inner peripheral surface 242 located outside the hydraulic passage 126 in the diametrical direction in one side of the hydraulic passage 126 in the axial direction and a first diametrical protrusion 201 that is located nearer to the one side in the axial direction than the inner peripheral surface 242 and protrudes inward in the diametrical direction. The diametrical protrusion 181 is butted against the first diametrical protrusion 201 to weld and form the butted parts together.

## Claims

1. A shaft connector comprising:
a shaft member (102); and
a tube member (101) externally fitted to the shaft member (102),
wherein one member (101) of the tube member (101) and the shaft member (102) has a hydraulic passage (126) for pressing a peripheral surface (124) of the one member (101) to a peripheral surface (120) of the other member (102) when the one member (101) transmits a torque between the one member (101) and the other member (102) of the tube member (101) and the shaft member (102), the hydraulic passage (12b) is extended substantially in the axial direction of the one member (101),
the one member (101) includes a first annular member (170) having the peripheral surface (124) of the one member (101) and a second annular member (171) opposed to the first member (170) through the hydraulic passage (126), the first member (170) has an annular diametrical protrusion (181) that protrudes toward a side of the one member (101) diametrically opposite to the other member (102) in one side of the hydraulic passage (126) in the axial direction, the second member (171) includes a peripheral surface (242) located in an opposite side to the peripheral surface (124) side of the one member (101) in the diametrical direction relative to the hydraulic passage (126) and an annular diametrical protrusion (201) that is located in one side of the peripheral surface (242) in the axial direction and protrudes toward the other member (102) side in the diametrical direction in one side of the hydraulic passage (126) in the axial direction,
**characterized in that**
a peripheral surface located in an end of an extending part (186) of the first member (170) in the diametrical direction is formed integrally with a peripheral surface located in an end of an extending part (244) of the second member (171) in the diametrical direction,
a welding part (203) is provided that is located in an opposite side to the peripheral surface (124) side of the one member (101) in the diametrical direction relative to the hydraulic passage (126), and
an outer peripheral surface of the diametrical protrusion (181) of the first member (170) is formed integrally with an inner peripheral surface of the diametrical protrusion (201) of the second member (171) by the welding part (203), wherein the inner peripheral surface (242) of the second member (171) is located with a space from an outer peripheral surface (224) of the first member (170) which is diametrically overlapped on the inner peripheral surface (242), thereby forming an annular sealing chamber (225), located axially between the diametrical protrusions (181, 201) and the hydraulic chamber (126).

2. A torque limiter comprising:
a shaft connector according to claim 1, wherein the hydraulic passage (126) is diametrically expanded by liquid sealed in the hydraulic passage (126) to frictionally engage the shaft member (102) with the tube member (101) and the liquid sealed in the hydraulic passage (126) is removed to rotate the shaft member (102) relative to the tube member (101).

## Patentansprüche

1. Wellenverbinder mit:
einem Wellenelement (102); und
einem Rohrelement (101), das extern zu dem Wellenelement (102) gepasst ist,
wobei ein Element (101) des Rohrelements (101) und des Wellenelements (102) einen hydraulischen Durchgang (126) zum Drücken einer Umfangsfläche (124) des einen Elements (101) zu einer Umfangsfläche (120) des anderen Elements (102) hat, wenn das eine Element (101) ein Drehmoment zwischen dem einen Element (101) und dem anderen Element (102) des Rohrelements (101) und des Wellenelements (102) überträgt, wobei der hydraulische Durchgang (12b) im Wesentlichen in der axialen Richtung des einen Elements (101) erstreckt ist,
das eine Element (101) ein erstes ringförmiges Element (170), das die Umfangsfläche (124) des einen Elements (101) hat, und ein zweites ringförmiges Element (171) hat, das dem ersten Element (170) über den Hydraulikdurchgang (126) gegenüberliegt, wobei das erste Element (170) einen ringförmigen diametralen Vorsprung (181) hat, der in Richtung einer Seite des einen Elements (101) vorsteht, die diametral entgegensetzt zu dem anderen Element (102) in einer Seite des hydraulischen Durchgangs (126) in der axialen Richtung ist, das zweite Element (171) eine Umfangsfläche (242), die in einer entgegengesetzten Seite zu der Seite der Umfangsfläche (124) des einen Elements (101) in der diametralen Richtung relativ zu dem Hydraulikdurchgang (126) liegt, und einen ringförmigen diametralen Vorsprung (201) umfasst, der in einer Seite der Umfangsfläche (242) in der axialen Richtung liegt und in Richtung der Seite des anderen Elements (102) in der diametralen Richtung in einer Seite des Hydraulikdurchgangs (126) in der axialen Richtung vorsteht,
**dadurch kennzeichnet, dass**
eine Umfangsfläche, die in einem Ende eines Erstreckungsteils (186) des ersten Elements (170) in der diametralen Richtung liegt, einstückig mit einer Umfangsfläche ausgebildet ist, die in einem Ende eines Erstreckungsteils (244) des zweiten Elements (171) in der diametralen Richtung liegt,
ein Schweißteil (203) vorgesehen ist, der in einer entgegengesetzten Seite zu der Seite der Umfangsfläche (124) des einen Elements (101) in der diametralen Richtung relativ zu dem Hydraulikdurchgang (126) liegt, und
eine äußere Umfangsfläche des diametralen Vorsprungs (181) des ersten Elements (170) einstückig mit einer inneren Umfangsfläche des diametralen Vorsprungs (201) des zweiten Elements (171) mittels des Schweißteils (203) ausgebildet ist, wobei die innere Umfangsfläche (242) des zweiten Elements (171) mit einem Raum von einer äußeren Umfangsfläche (224) des ersten Elements (170) liegt, das an der inneren Umfangsfläche (242) diametral überlappt, wodurch es eine ringförmige Dichtkammer (225) ausbildet, die axial zwischen den diametralen Vorsprüngen (181, 201) und der Hydraulikkammer (126) liegt.

2. Drehmomentbegrenzer mit:
einem Wellenverbinder nach Anspruch 1, wobei der Hydraulikdurchgang (126) diametral mittels in dem Hydraulikdurchgang (126) abgedichteter Flüssigkeit erstreckt ist, um das Wellenelement (102) mit dem Rohrelement (101) reibschlüssig einzugreifen, und die in dem Hydraulikdurchgang (126) abgedichtete Flüssigkeit entfernt wird, um das Wellenelement (102) relativ zu dem Rohrelement (101) zu rotieren.

## Revendications

1. Connecteur d'arbre comprenant :
un élément d'arbre (102) ; et
un élément de tube (101) fixé à l'extérieur sur l'élément d'arbre (102),
dans lequel un élément (101) de l'élément de tube (101) et de l'élément d'arbre (102) présente un passage hydraulique (126) pour presser une surface périphérique (124) de l'un élément (101) sur une surface périphérique (120) de l'autre élément (102) lorsque l'un élément (101) transmet un couple entre l'un élément (101) et l'autre élément (102) de l'élément de tube (101) et l'élément d'arbre (102), le passage hydraulique (12b) est étendu sensiblement dans la direction axiale de l'un élément (101),
l'un élément (101) comprend un premier élément annulaire (170) ayant la surface périphérique (124) de l'un élément (101) et un second élément annulaire (171) opposée au premier élément (170) à travers le passage hydraulique (126), le premier élément (170) présente une saillie diamétrale annulaire (181) qui dépasse vers un côté de l'un élément (101) diamétralement opposée à l'autre élément (102) dans un côté du passage hydraulique (126) dans la direction axiale, le second élément (171) comprend une surface périphérique (242) située dans un côté opposé au côté de la surface périphérique (124) de l'un élément (101) dans la direction diamétrale par rapport au passage hydraulique (126) et une saillie diamétrale annulaire (201) qui est située dans un côté de la surface périphérique (242) dans la direction axiale et dépasse vers le côté de l'autre élément (102) dans la direction diamétrale dans un côté du passage hydraulique (126) dans la direction axiale,
**caractérisé en ce que**
une surface périphérique, située dans une extrémité d'une partie d'extension (186) du premier élément (170) dans la direction diamétrale, est formée intégralement avec une surface périphérique située dans une extrémité d'une partie d'extension (244) du second élément (171) dans la direction diamétrale,
une partie de soudage (203) est prévue, laquelle est située dans un côté opposé au côté de la surface périphérique (124) de l'un élément (101) dans la direction diamétrale par rapport au passage hydraulique (126), et
une surface périphérique extérieure de la saillie diamétrale (181) du premier élément (170) est formée intégralement avec une surface périphérique intérieure de la saillie diamétrale (201) du second élément (171) par la partie de soudage (203), dans lequel la surface périphérique intérieure (242) du second élément (171) est située avec un espace d'une surface périphérique extérieure (224) du premier élément (170) qui est diamétralement recouverte sur la surface périphérique intérieure (242), formant par là-même une chambre d'étanchéité annulaire (225) située axialement entre les saillies diamétrales (181, 201) et la chambre hydraulique (126).

2. Limiteur de couple comprenant :
un connecteur d'arbre selon la revendication 1, dans lequel le passage hydraulique (126) est diamétralement dilaté par du liquide inclus dans le passage hydraulique (126) pour engager par friction l'élément d'arbre (102) avec l'élément de tube (101) et le liquide inclus dans le passage hydraulique (126) est retiré pour faire tourner l'élément d'arbre (102) par rapport à l'élément de tube (101).
